# EUROPÄISCHE PATENTSCHRIFT

(11) **EP 3 227 164 B1**
(45) Veröffentlichungstag und Bekanntmachung des Hinweises auf die Patenterteilung: **05.06.2019**
(21) Anmeldenummer: 15790483.0
(22) Anmeldetag: 21.10.2015
(51) Int. Cl.: B62D 5/04, B62D 6/00, B62D 15/02

(54) **LENKVORRICHTUNG SOWIE VERFAHREN ZUR STEUERUNG EINER LENKVORRICHTUNG**
STEERING DEVICE AND METHOD FOR CONTROLLING A STEERING DEVICE
DISPOSITIF DIRECTIONEL ET PROCÉDÉ POUR PILOTER UNE DIRECTION

(30) Priorität: 02.12.2014 DE 102014117718
(43) Veröffentlichungstag der Anmeldung: 11.10.2017
(73) Patentinhaber: TRW Automotive GmbH, 73553 Alfdorf (DE)
(72) Erfinder: KASHI, Keiwan, 40237 Duesseldorf (DE); BURDESSA, Catharina, 45133 Essen (DE)
(74) Vertreter: Prinz & Partner mbB
(86) Internationale Anmeldenummer: PCT/EP2015/074371
(87) Internationale Veröffentlichungsnummer: WO 2016/087118

(56) Entgegenhaltungen:
- DE-A1- 19 806 458
- DE-A1-102009 000 638
- US-A1- 2014 156 144

## Beschreibung

Die Erfindung betrifft eine Lenkvorrichtung für ein Kraftfahrzeug sowie ein Verfahren zur Steuerung einer Lenkvorrichtung.

Moderne Lenkvorrichtungen eines Kraftfahrzeugs sind heutzutage typischerweise elektronisch unterstützt, sodass das vom Fahrer des Kraftfahrzeugs aufgebrachte Lenkmoment durch eine elektronische Lenkunterstützungseinheit verstärkt wird. Hierdurch wird das Lenken des Kraftfahrzeugs vom Fahrer insgesamt als angenehmer empfunden. Auch kann die Lenkunterstützungseinheit ein Gegenmoment erzeugen, sodass gerade bei höheren Geschwindigkeiten ein erhöhtes Lenkmoment vom Fahrer aufgebracht werden muss, um zu lenken. Dies dient der Betriebssicherheit.

Typischerweise weisen die elektronischen Lenkunterstützungseinheiten ein Getriebe sowie einen elektrischen Motor auf, die eine gewisse Reibung sowie Massenträgheit der Lenkvorrichtung zur Folge haben. Insbesondere wird das selbstständige und auch gewünschte Rücklaufverhalten der Lenkvorrichtung, welches dem Fahrer aus nicht elektronisch unterstützten Lenkvorrichtungen bekannt ist, negativ beeinflusst. Die negative Beeinflussung ist derart, dass sich die Räder aufgrund der Spur des Fahrzeugs beim Übergang von einer Kurvenfahrt in eine Geradeausfahrt zwar zurückstellen, der Fahrer jedoch ein mit dem Rückstellen der Räder verbundenes Moment nicht am Lenkelement spürt.

Im Stand der Technik wird das Rücklaufverhalten aktiv von der elektronischen Lenkunterstützungseinheit bereitgestellt, indem ein entsprechendes Unterstützungsmoment zur Rückstellung erzeugt wird. Hierzu weist die elektronische Lenkunterstützungseinheit eine Steuer- und Regeleinheit auf, welche über Sensoren den Lenkwinkel, die Lenkwinkelgeschwindigkeit sowie die Fahrzeuggeschwindigkeit erfasst und den elektrischen Motor entsprechend ansteuert, sodass dem Fahrer über das erzeugte Unterstützungsmoment ein selbsttätiges Rückstellen des Lenkelements suggeriert wird.

Aus der DE 198 06 458 A1 ist gemäß dem Oberbegriff der Ansprüche 1 bzw. 7 eine Lenkvorrichtung für ein Kraftfahrzeug bekannt, die einen Lenkwinkelsensor aufweist, der die Position der Zahnstange erfasst, die zur Berechnung eines Unterstützungsmoments herangezogen wird.

Als nachteilig hat sich dabei jedoch herausgestellt, dass weiterhin Einflussfaktoren für die jeweilige Fahrzeugtopologie aufwendig berücksichtigt und kompensiert werden müssen, da der Lenkwinkel und die Lenkwinkelgeschwindigkeit an der Lenkwelle erfasst werden, die je nach Fahrzeugtyp anders zu den Rädern übersetzt sind. Weitere Einflussfaktoren sind beispielsweise die Spreizung, der Nachlauf und der Lenkrollradius der Lenkachsgeometrie.

Die Aufgabe der Erfindung ist es, eine Lenkvorrichtung sowie ein Verfahren bereitzustellen, mit denen eine aktive Rückstellung der Lenkvorrichtung unabhängig von der Fahrzeugtopologie möglich ist.

Die Aufgabe der Erfindung wird durch eine Lenkvorrichtung für ein Kraftfahrzeug gelöst, die ein Lenkelement zum Lenken des Kraftfahrzeugs sowie ein Betätigungselement umfasst, mit dem Räder des Kraftfahrzeugs in Abhängigkeit von einer Betätigung des Lenkelements verstellt werden, wobei dem Lenkelement eine Lenkunterstützungseinheit zugeordnet ist, insbesondere eine elektronische Lenkunterstützungseinheit zur aktiven Rückstellung des Lenkelements, die einen Motor und eine Steuer- und Regeleinheit umfasst, die den Motor zur Erzeugung eines Unterstützungsmoments ansteuert, wobei die Steuer- und Regeleinheit Daten von einem ersten Sensor empfängt, der die Position des Betätigungselements unmittelbar erfasst und den Motor in Abhängigkeit von der Position des Betätigungselements ansteuert, und wobei die Steuer- und Regeleinheit Daten von einem zweiten Sensor empfängt, der die Geschwindigkeit des Betätigungselements erfasst.

Die Aufgabe der Erfindung wird zudem durch ein Verfahren zur Steuerung einer Lenkvorrichtung, insbesondere einer Lenkvorrichtung der zuvor genannten Art, gelöst, wobei eine Steuer- und Regeleinheit die Position eines Betätigungselements mittels eines ersten Sensors erfasst und wobei die Steuer- und Regeleinheit ein Unterstützungsmoment eines Motors zur Rückstellung eines Lenkelements in Abhängigkeit von der Position des Betätigungselements berechnet, wobei die Geschwindigkeit des Betätigungselements von einem zweiten Sensor erfasst wird, der diesen Wert an die Steuer- und Regeleinheit übermittelt, die den erfassten Wert zur Berechnung des Unterstützungsmoments des Motors heranzieht.

Der Grundgedanke der Erfindung ist es, dass die Steuer- und Regeleinheit den Motor unmittelbar in Abhängigkeit der Position des Betätigungselements ansteuert, sodass Übersetzungsverhältnisse zwischen dem Lenkelement und dem Betätigungselement sowie Elastizitäten und Fertigungstoleranzen zwischen dem Lenkelement und dem Betätigungselement unberücksichtigt bleiben können. Generell wird zur Ansteuerung des Motors eine Regelgröße verwendet, die die Position der Räder direkt erfasst, da der Sensor die Position des Betätigungselements detektiert, das direkt mit den Rädern gekoppelt ist. Mit der erfindungsgemäßen Lenkvorrichtung ist eine aktive Rückstellung des Lenkelements unabhängig von der Fahrzeugtopologie sowie der Anordnung der Lenkvorrichtung möglich. Über das Verfahren ist es analog zur Ausführung der Lenkvorrichtung möglich, das Unterstützungsmoment des Motors zur Rückstellung des Lenkelements unabhängig von der Fahrzeugtopologie zu berechnen, da als Regelgröße die Position des Betätigungselements unmittelbar erfasst wird. Demnach wird erfindungsgemäß gerade nicht der Lenkwinkel und/oder die Lenkwinkelgeschwindigkeit des Lenkelements von einem Sensor erfasst, um das Unterstützungsmoment des Motors zur Rückstellung des Lenkelements zu berechnen, wie dies im Stand der Technik geschieht. Eine Berechnung auf Basis des Lenkwinkels und/oder der Lenkwinkelgeschwindigkeit ist nämlich von der Fahrzeugtopologie und der Anordnung der Lenkvorrichtung abhängig und somit nicht universell.

Durch den zweiten Sensor werden Daten zur Berechnung des Unterstützungsmoments bereitgestellt, die die vorliegende Fahrsituation noch genauer erfassen, da zusätzlich die Geschwindigkeit des Betätigungselements beim Übergang in seine Neutralstellung gemessen wird. Diese Daten sind ebenfalls unabhängig vom Aufbau des Fahrzeugs bzw. der Übersetzung des Lenkelements zum Betätigungselement.

Ein weiterer Aspekt der Erfindung sieht vor, dass der erste und der zweite Sensor in einer Sensoreinheit ausgebildet sein können. Da beide Sensoren Zustände des Betätigungselements erfassen, können sie in platzsparender Weise in einer einzigen Sensoreinheit ausgebildet sein.

Insbesondere empfängt die Steuer- und Regeleinheit Daten von einem dritten Sensor, der die Geschwindigkeit des Kraftfahrzeugs erfasst.

Beim Verfahren wird die vom dritten Sensor erfasste Fahrzeuggeschwindigkeit an die Steuer- und Regeleinheit übermittelt, die den erfassten Wert zur Berechnung des Unterstützungsmoments des Motors heranzieht.

Die Geschwindigkeit des Kraftfahrzeugs dient als weitere Regelgröße, da das Empfinden des Fahrers generell von der Fahrzeuggeschwindigkeit abhängt, die einen wichtigen Parameter hinsichtlich der Betriebssicherheit des Kraftfahrzeugs darstellt. Ferner beeinflusst die Geschwindigkeit des Kraftfahrzeugs das Rückstellen der Räder aus einer Kurvenfahrt in deren Neutralstellung, da die Geschwindigkeit die Reibkraft zwischen dem Asphalt und den Rädern beeinflusst und somit deren Rückstellkraft.

Gemäß einem weiteren Aspekt der Erfindung weist die Steuer- und Regeleinheit einen Referenzgenerator auf, der eine Referenzgeschwindigkeit des Betätigungselements berechnet, insbesondere in Abhängigkeit von den eingehenden Sensorsignalen.

Im Verfahren wird aufgrund der durch die Sensoren erfassten Werte eine Referenzgeschwindigkeit des Betätigungselements in dem Referenzgenerator der Steuer- und Regeleinheit erzeugt.

Die Referenzgeschwindigkeit gibt an, mit welcher Geschwindigkeit sich das Betätigungselement in seine Neutralstellung bewegen soll, wobei hier unter anderem die tatsächliche Geschwindigkeit des Betätigungselements und die Fahrzeuggeschwindigkeit eingehen. Die Referenzgeschwindigkeit des Betätigungselements wird demnach anhand von Parametern berechnet, die unabhängig von der jeweiligen Fahrzeugtopologie sind. Die Steuer- und Regeleinheit kann zudem ständig die aktuelle Geschwindigkeit des Betätigungselements mit der Referenzgeschwindigkeit vergleichen und das Unterstützungsmoment entsprechend anpassen.

Ein weiterer Aspekt der Erfindung sieht vor, dass die Steuer- und Regeleinheit eine Berechnungseinheit, eine Begrenzungseinheit sowie eine Dämpfungseinheit umfasst, die Daten von wenigstens einem Sensor am Lenkelement empfängt. Über die zusätzlichen Einheiten kann generell eine sicherer Fahrbetrieb gewährleistet werden.

Im Verfahren kann ein Dämpfungsfaktor in einer Dämpfungseinheit der Steuer-und Regeleinheit berechnet werden, insbesondere in Abhängigkeit von der Position, der Geschwindigkeit und dem Drehmoment des Lenkelements. Der Dämpfungsfaktor hängt somit von der Aktivität des Fahrers ab und dämpft das vom Motor der elektronischen Lenkunterstützungseinheit bereitzustellende Unterstützungsmoment entsprechend der vorliegenden Fahrsituation, sodass der Fahrer nicht überrascht wird.

Ein weiterer Aspekt des Verfahrens sieht vor, dass in einer Begrenzungseinheit der Steuer- und Regeleinheit ein maximales Unterstützungsmoment des Motors berechnet wird, insbesondere in Abhängigkeit vom von der Dämpfungseinheit ermittelten Dämpfungsfaktor und der Kraftfahrzeuggeschwindigkeit. Hierdurch wird sichergestellt, dass das bereitgestellte Unterstützungsmoment immer in einem Bereich liegt, der ein sicheres Betreiben des Fahrzeugs garantiert.

Bei den Lenkvorrichtungen kann es sich um eine elektrisch angetriebene oder elektrisch unterstützte Lenkvorrichtung handeln, insbesondere eine "Steer-by-wire"-Lenkvorrichtung. Gerade bei derartigen Lenkvorrichtungen ist es üblich, dass elektronische Lenkunterstützungseinheiten vorgesehen sind. Der Motor kann je nach Lenkvorrichtung derjenige Motor sein, der auch das Betätigungselement verstellt.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung einer erfindungsgemäßen Lenkvorrichtung, und
- Figur 2 eine schematische Darstellung zur Veranschaulichung des erfindungsgemäßen Verfahrens zur Steuerung einer Lenkvorrichtung.

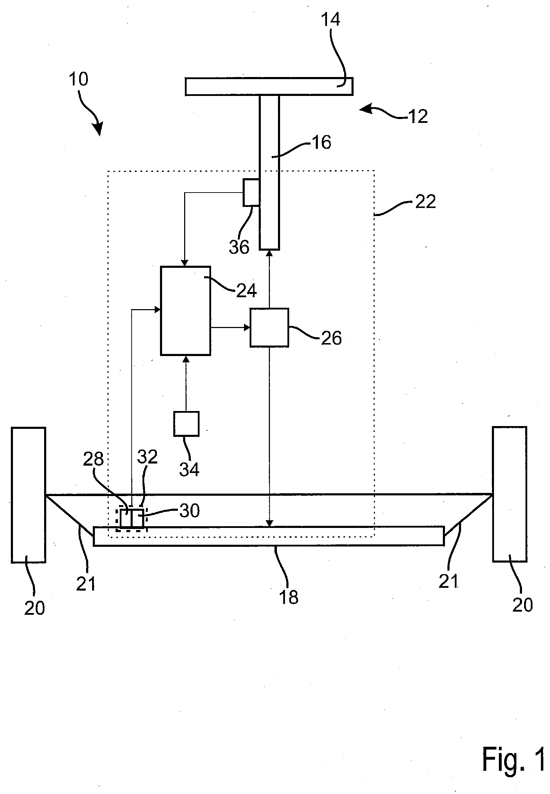

In Figur 1 ist eine Lenkvorrichtung 10 für ein Kraftfahrzeug schematisch dargestellt, die ein Lenkelement 12, das ein Lenkrad 14 und eine daran angeordnete Lenkwelle 16 umfasst, sowie ein Betätigungselement 18 aufweist, an dem zwei Räder 20 des Kraftfahrzeugs über Spurstangenhebel 21 direkt gekoppelt sind. Je nach Ausführung der Lenkvorrichtung 10 können auch noch Lenkhebel und Achsschenkel vorgesehen sein.

Zwischen dem Lenkelement 12 und dem Betätigungselement 18 ist eine elektronische Lenkunterstützungseinheit 22 angeordnet, die generell zur Unterstützung der Lenkvorrichtung 10 ausgebildet sein kann. Dies kann ein aktives Verstellen des Betätigungselements 18 sowie ein Erzeugen von Momenten im Lenkelement 12 umfassen, um ein verbessertes Empfinden beim Fahrer herzustellen. Die elektronische Lenkunterstützungseinheit 22 kann zudem das Lenkelement 12 aktiv zurückstellen, wenn das Fahrzeug aus einer Kurvenfahrt in eine Geradeausfahrt übergeht.

In der Figur 1 sind nur diejenigen Komponenten der elektronischen Lenkunterstützungseinheit 22 gezeigt, welche für das aktive Rückstellen des Lenkelements 12 in seine Neutralstellung benötigt werden.

Die elektronische Lenkunterstützungseinheit 22 weist demnach eine Steuer- und Regeleinheit 24 auf, die als zentrales Element der Lenkunterstützungseinheit 22 einen elektrischen Motor 26 antreibt, der das Lenkelement 12 aktiv in seine Neutralstellung zurückstellt.

Die Steuer- und Regeleinheit 24 empfängt Daten von einem ersten Sensor 28, der die Position des Betätigungselements 18 erfasst, sowie von einem zweiten Sensor 30, der die Geschwindigkeit des Betätigungselements 18 erfasst. Die beiden Sensoren 28, 30 können dabei in einer einzigen Sensoreinheit 32 verwirklicht sein, sodass sie platzsparend ausgebildet sind.

Ferner empfängt die Steuer- und Regeleinheit 24 Daten von einem dritten Sensor 34, welcher die Fahrzeuggeschwindigkeit erfasst.

Zusätzlich kann die Steuer- und Regeleinheit 24 Daten von einem weiteren Sensor 36 erfassen, der am Lenkelement 12, insbesondere an der Lenkwelle 16, angeordnet ist und Daten wie die Lenkwellenwinkelposition, die Lenkwellendrehgeschwindigkeit und das Lenkwellenmoment an die Steuer- und Regeleinheit 24 übermittelt.

Über die drei Sensoren 28, 30, 34 kann die Steuer- und Regeleinheit 24 ein Unterstützungsmoment des Motors 26 berechnen, welches auf das Lenkelement 12 wirkt, um dem Fahrer eine aktive Rückstellung des Lenkelements 12 in die Neutralstellung zu suggerieren, das aus nicht elektronisch unterstützten Lenkvorrichtungen bekannt ist.

Die vom weiteren Sensor 36 erfassten Daten dienen ferner zu einer Art Feineinstellung des Unterstützungsmoments des Motors 26.

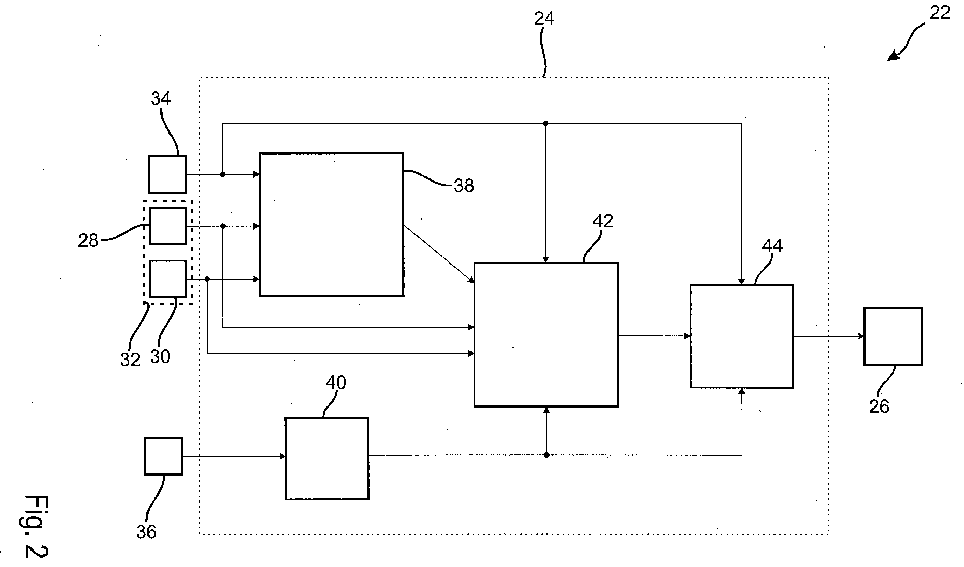

Die Funktionsweise der Lenkvorrichtung 10 und insbesondere die Steuerung der Lenkunterstützungseinheit 22 werden anhand der Figur 2 beschrieben.

In Figur 2 ist schematisch dargestellt, wie die von den einzelnen Sensoren 28, 30, 34, 36 empfangenen Daten in der Steuer- und Regeleinheit 24 der elektronischen Lenkunterstützungseinheit 22 verarbeitet werden, um den Motor 26 der elektronischen Lenkunterstützungseinheit 22 anzusteuern, sodass ein bestimmtes Unterstützungsmoment vom Motor 26 erzeugt wird, aufgrund dessen das Lenkelement 12 aktiv zurückgestellt wird.

Die Steuer- und Regeleinheit 24 weist dazu einen Referenzgenerator 38, eine Dämpfungseinheit 40, eine Berechnungseinheit 42 sowie eine Begrenzungseinheit 44 auf, die jeweils Daten von den verschiedenen Sensoren 28, 30, 34, 36 empfangen und wie nachfolgend beschrieben verarbeiten.

Der Referenzgenerator 38 erzeugt ausgehend von den Sensorsignalen der ersten drei Sensoren 28, 30, 34 eine Referenzgeschwindigkeit des Betätigungselements 18, mit der sich das Betätigungselement 18 in seine Neutralstellung zurückbewegen soll. Diese Referenzgeschwindigkeit übermittelt der Referenzgenerator 38 an die Berechnungseinheit 42.

Die Berechnungseinheit 42 erhält zudem direkt von den Sensoren 28, 30, 34 die jeweils gemessenen Daten. Die Berechnungseinheit 42 empfängt demnach die vom Referenzgenerator 38 erzeugte Referenzgeschwindigkeit des Betätigungselements 18, die vom dritten Sensor 34 erfasste Fahrzeuggeschwindigkeit, die vom zweiten Sensor 30 erfasste tatsächliche Geschwindigkeit des Betätigungselements 18 sowie die vom ersten Sensor 28 erfasste Position des Betätigungselements 18.

Darüber hinaus empfängt die Berechnungseinheit 42 einen Dämpfungsfaktor, der in der Dämpfungseinheit 40 in Abhängigkeit von den vom weiteren Sensor 36 erfassten Daten berechnet worden ist. Der Dämpfungsfaktor ist dabei eine Größe, die auf die Aktivität des Fahrers zurückschließt, da die vom weiteren Sensor 36 erfassten Daten direkt am Lenkelement 12 gemessen werden, das vom Fahrer bedient wird. Mittels des Dämpfungsfaktors kann das vom Motor 26 zu erzeugende Unterstützungsmoment an die Aktivität des Fahrers angepasst werden.

In der Berechnungseinheit 42 wird nun ausgehend von den zuvor genannten Daten ein vorläufiges Unterstützungsmoment des Motors 26 berechnet. Die Steuer-und Regeleinheit 24 kann dabei die vom Referenzgenerator 38 erzeugte Referenzgeschwindigkeit mit der tatsächlichen Geschwindigkeit des Betätigungselements 18 vergleichen und das vorläufige Unterstützungsmoment des Motors 26 entsprechend anpassen. Dieser Verfahrensschritt kann iterativ ausgeführt werden, wobei auch eine Anpassung der im Referenzgenerator 38 berechneten Referenzgeschwindigkeit möglich ist.

Das in der Berechnungseinheit 42 berechnete vorläufige Unterstützungsmoment kann abschließend in der Begrenzungseinheit 44 begrenzt werden. Hierzu wird der Begrenzungseinheit 44 der von der Dämpfungseinheit 40 berechnete Dämpfungsfaktor, die vom dritten Sensor 34 erfasste Fahrzeuggeschwindigkeit sowie das von der Berechnungseinheit 42 berechnete vorläufige Unterstützungsmoment bereitgestellt.

Die Begrenzungseinheit 44 errechnet anhand der eingehenden Größe eine Begrenzung des vorläufigen Unterstützungsmoment und begrenzt dieses in gewissen Fahrzeugsituationen, sodass sichergestellt ist, dass das vom Motor 26 erzeugte Unterstützungsmoment der Lenkunterstützungseinheit 22 nicht zu einer unsicheren Fahrzeugsituation führen würde. Dabei gehen insbesondere die Fahrzeuggeschwindigkeit und das Verhalten des Fahrers ein.

Der elektrische Motor 26 kann ein separater Motor sein, der lediglich zur aktiven Rückstellung des Lenkelements 12 vorgesehen ist. Alternativ kann der Motor 26 derjenige Motor sein, der auch das Betätigungselement 18 während eines Lenkvorgangs verstellt. Dies ist abhängig von der Art der Lenkvorrichtung 10. Handelt es sich beispielsweise um eine "Steer-by-wire"-Lenkvorrichtung, die keine mechanische Verbindung zwischen Lenkelement 12 und Betätigungselement 18 hat, so sind zwei separate Motoren vorgesehen. Ist die Lenkvorrichtung dagegen eine elektronisch unterstützte Lenkvorrichtung, die eine mechanische Verbindung aufweisen kann, so kann insgesamt nur ein Motor vorgesehen sein.

Mit der erfindungsgemäßen Lenkvorrichtung 10 sowie dem erfindungsgemäßen Verfahren zur Steuerung einer Lenkvorrichtung ist sichergestellt, dass das Unterstützungsmoment der elektronischen Lenkunterstützungseinheit 22 unabhängig von der Fahrzeugtopologie bestimmt werden kann, sodass ein sicherer Fahrzeugbetrieb sowie eine aktive Rückstellung des Lenkelements 12 garantiert ist.

## Patentansprüche

1. Lenkvorrichtung (10) für ein Kraftfahrzeug, die ein Lenkelement (12) zum Lenken des Kraftfahrzeugs sowie ein Betätigungselement (18) umfasst, mit dem Räder (20) des Kraftfahrzeugs in Abhängigkeit von einer Betätigung des Lenkelements (12) verstellt werden, wobei dem Lenkelement (12) eine Lenkunterstützungseinheit (22) zugeordnet ist, insbesondere eine elektronische Lenkunterstützungseinheit zur aktiven Rückstellung des Lenkelements (12), die einen Motor (26) und eine Steuer- und Regeleinheit (24) umfasst, die den Motor (26) zur Erzeugung eines Unterstützungsmoments ansteuert, wobei die Steuer- und Regeleinheit (24) Daten von einem ersten Sensor (28) empfängt, der die Position des Betätigungselements (18) unmittelbar erfasst, und den Motor (26) in Abhängigkeit von der Position des Betätigungselements (18) ansteuert, **dadurch gekennzeichnet, dass** die Steuer- und Regeleinheit (24) Daten von einem zweiten Sensor (30) empfängt, der die Geschwindigkeit des Betätigungselements (18) erfasst.

2. Lenkvorrichtung (10) nach Anspruch 1, **dadurch gekennzeichnet, dass** der erste und der zweite Sensor (28, 30) in einer Sensoreinheit (32) ausgebildet sind.

3. Lenkvorrichtung (10) nach Anspruch 1 oder 2, **dadurch gekennzeichnet, dass** die Steuer- und Regeleinheit (24) Daten von einem dritten Sensor (34) empfängt, der die Geschwindigkeit des Kraftfahrzeugs erfasst.

4. Lenkvorrichtung (10) nach einem der vorhergehenden Ansprüche, **dadurch gekennzeichnet, dass** die Steuer- und Regeleinheit (24) einen Referenzgenerator (38) aufweist, der eine Referenzgeschwindigkeit des Betätigungselements (18) berechnet, insbesondere in Abhängigkeit von den eingehenden Sensorsignalen.

5. Lenkvorrichtung (10) nach einem der vorhergehenden Ansprüche, **dadurch gekennzeichnet, dass** die Steuer- und Regeleinheit (24) eine Berechnungseinheit (42), eine Begrenzungseinheit (44) sowie eine Dämpfungseinheit (40) umfasst, die Daten von wenigstens einem Sensor (36) an dem Lenkelement (12) empfängt.

6. Lenkvorrichtung (10) nach einem der vorhergehenden Ansprüche, **dadurch gekennzeichnet, dass** die Lenkvorrichtung (10) eine elektrisch angetriebene oder elektrisch unterstützte Lenkvorrichtung ist, insbesondere eine "Steer-by-wire"-Lenkvorrichtung.

7. Verfahren zur Steuerung einer Lenkvorrichtung (10), insbesondere einer Lenkvorrichtung (10) nach einem der vorhergehenden Ansprüche, wobei
a) eine Steuer- und Regeleinheit (24) die Position eines Betätigungselements (18) mittels eines ersten Sensors (28) erfasst und wobei
b) die Steuer- und Regeleinheit (24) ein Unterstützungsmoment eines Motors (26) zur Rückstellung eines Lenkelements (12) in Abhängigkeit von der Position des Betätigungselements (18) berechnet,
**dadurch gekennzeichnet, dass** ein zweiter Sensor (30) die Geschwindigkeit des Betätigungselements (18) erfasst und diesen Wert an die Steuer- und Regeleinheit (24) übermittelt, die den erfassten Wert zur Berechnung des Unterstützungsmoments des Motors (26) heranzieht.

8. Verfahren nach Anspruch 7, **dadurch gekennzeichnet, dass** ein dritter Sensor (34) die Fahrzeuggeschwindigkeit erfasst und diesen Wert an die Steuer-und Regeleinheit (24) übermittelt, die den erfassten Wert zur Berechnung des Unterstützungsmoments des Motors (26) heranzieht.

9. Verfahren nach einem der Ansprüche 7 bis 8, **dadurch gekennzeichnet, dass** aufgrund der durch die Sensoren (28, 30, 34) erfassten Werte eine Referenzgeschwindigkeit des Betätigungselements (18) in einem Referenzgenerator (38) der Steuer- und Regeleinheit (24) erzeugt wird.

10. Verfahren nach einem der Ansprüche 7 bis 9, **dadurch gekennzeichnet, dass** ein Dämpfungsfaktor in einer Dämpfungseinheit (40) der Steuer- und Regeleinheit (24) berechnet wird, insbesondere in Abhängigkeit von der Position, der Geschwindigkeit und dem Drehmoment des Lenkelements (12).

11. Verfahren nach einem der Ansprüche 7 bis 10, **dadurch gekennzeichnet, dass** in einer Begrenzungseinheit (44) der Steuer- und Regeleinheit (24) ein maximales Unterstützungsmoment des Motors (26) berechnet wird, insbesondere in Abhängigkeit des von der Dämpfungseinheit (40) ermittelten Dämpfungsfaktors und der Kraftfahrzeuggeschwindigkeit.

## Claims

1. A steering device (10) for a motor vehicle, comprising a steering element (12) for steering the motor vehicle, and an actuating element (18) by means of which wheels (20) of the motor vehicle are adjusted as a function of an actuation of the steering element (12), the steering element (12) having a steering assist unit (22) associated with it, in particular an electronic steering assist unit for active return of the steering element (12), the steering assist unit comprising a motor (26) and an open- and closed-loop control unit (24) which drives the motor (26) for generating an assist torque, the open- and closed-loop control unit (24) receiving data from a first sensor (28) which directly senses the position of the actuating element (18), and driving the motor (26) as a function of the position of the actuating element (18), **characterized in that** the open- and closed-loop control unit (24) receives data from a second sensor (30) which senses the velocity of the actuating element (18).

2. The steering device (10) according to claim 1, **characterized in that** the first and second sensors (28, 30) are formed in a sensor unit (32).

3. The steering device (10) according to claim 1 or 2, **characterized in that** the open- and closed-loop control unit (24) receives data from a third sensor (34) which senses the speed of the motor vehicle.

4. The steering device (10) according to any of the preceding claims, **characterized in that** the open- and closed-loop control unit (24) includes a reference generator (38) which calculates a reference velocity of the actuating element (18), in particular as a function of the incoming sensor signals.

5. The steering device (10) according to any of the preceding claims, **characterized in that** the open- and closed-loop control unit (24) comprises a calculating unit (42), a limiting unit (44), and a damping unit (40) which receives data from at least one sensor (36) on the steering element (12).

6. The steering device (10) according to any of the preceding claims, **characterized in that** the steering device (10) is an electrically powered or electrically assisted steering device, in particular a steer-by-wire steering device.

7. A method of controlling a steering device (10), in particular a steering device (10) according to any of the preceding claims, wherein:
a) an open- and closed-loop control unit (24) senses the position of an actuating element (18) by means of a first sensor (28), and
b) the open- and closed-loop control unit (24) calculates an assist torque of a motor (26) for returning a steering element (12) as a function of the position of the actuating element (18),
**characterized in that** a second sensor (30) senses the velocity of the actuating element (18) and transmits this value to the open- and closed-loop control unit (24), which uses the sensed value to calculate the assist torque of the motor (26).

8. The method according to claim 7, **characterized in that** a third sensor (34) senses the vehicle speed and transmits this value to the open- and closed-loop control unit (24), which uses the sensed value to calculate the assist torque of the motor (26).

9. The method according to any of claims 7 to 8, **characterized in that** on the basis of the values sensed by the sensors (28, 30, 34), a reference velocity of the actuating element (18) is generated in a reference generator (38) of the open- and closed-loop control unit (24).

10. The method according to any of claims 7 to 9, **characterized in that** a damping factor is calculated in a damping unit (40) of the open- and closed-loop control unit (24), in particular as a function of the position, the speed and the torque of the steering element (12).

11. The method according to any of claims 7 to 10, **characterized in that** a maximum assist torque of the motor (26) is calculated in a limiting unit (44) of the open- and closed-loop control unit (24), in particular as a function of the damping factor determined by the damping unit (40) and of the motor vehicle speed.

## Revendications

1. Dispositif de direction (10) pour un véhicule automobile, lequel comprend un élément de direction (12) pour diriger le véhicule automobile, et un élément d'actionnement (18) au moyen duquel des roues (20) du véhicule automobile sont ajustées en fonction d'un actionnement de l'élément de direction (12), une unité d'assistance à la direction (22) étant associée à l'élément de direction (12), en particulier une unité d'assistance à la direction électronique pour le rappel actif de l'élément de direction (12), laquelle comprend un moteur (26) et une unité de commande et de régulation (24) qui pilote le moteur (26) pour la génération d'un couple d'assistance, l'unité de commande et de régulation (24) recevant des données d'un premier capteur (28) qui détecte directement la position de l'élément d'actionnement (18), et pilotant le moteur (26) en fonction de la position de l'élément d'actionnement (18), **caractérisé en ce que** l'unité de commande et de régulation (24) reçoit des données d'un deuxième capteur (30) qui détecte la vitesse de l'élément d'actionnement (18).

2. Dispositif de direction (10) selon la revendication 1, **caractérisé en ce que** le premier et le deuxième capteur (28, 30) sont réalisés dans une unité de capteurs (32).

3. Dispositif de direction (10) selon la revendication 1 ou 2, **caractérisé en ce que** l'unité de commande et de régulation (24) reçoit des données d'un troisième capteur (34) qui détecte la vitesse du véhicule automobile.

4. Dispositif de direction (10) selon l'une des revendications précédentes, **caractérisé en ce que** l'unité de commande et de régulation (24) présente un générateur de référence (38) qui calcule une vitesse de référence de l'élément d'actionnement (18), en particulier en fonction des signaux de capteur entrant.

5. Dispositif de direction (10) selon l'une des revendications précédentes, **caractérisé en ce que** l'unité de commande et de régulation (24) comprend une unité de calcul (42), une unité de limitation (44) et une unité d'amortissement (40) qui reçoit des données d'au moins un capteur (36) sur l'élément de direction (12).

6. Dispositif de direction (10) selon l'une des revendications précédentes, **caractérisé en ce que** le dispositif de direction (10) est un dispositif de direction entraînée de manière électrique ou assisté de manière électrique, en particulier un dispositif de direction « steer-by-wire ».

7. Procédé de commande d'un dispositif de direction (10), en particulier d'un dispositif de direction (10) selon l'une des revendications précédentes,
a) une unité de commande et de régulation (24) détectant la position d'un élément d'actionnement (18) au moyen d'un premier capteur (28), et
b) l'unité de commande et de régulation (24) calculant un couple d'assistance d'un moteur (26) pour le rappel d'un élément de direction (12) en fonction de la position de l'élément d'actionnement (18),
**caractérisé en ce qu'**un deuxième capteur (30) détecte la vitesse de l'élément d'actionnement (18) et transmet cette valeur à l'unité de commande et de régulation (24), laquelle utilise la valeur détectée pour le calcul du couple d'assistance du moteur (26).

8. Procédé selon la revendication 7, **caractérisé en ce qu'**un troisième capteur (34) détecte la vitesse du véhicule et transmet cette valeur à l'unité de commande et de régulation (24) qui utilise la valeur détectée pour le calcul du couple d'assistance du moteur (26).

9. Procédé selon l'une des revendications 7 à 8, **caractérisé en ce qu'**une vitesse de référence de l'élément d'actionnement (18) est générée dans un générateur de référence (38) de l'unité de commande et de régulation (24) en raison des valeurs détectées par les capteurs (28, 30, 34).

10. Procédé selon l'une des revendications 7 à 9, **caractérisé en ce qu'**un facteur d'amortissement est calculé dans une unité d'amortissement (40) de l'unité de commande et de régulation (24), en particulier en fonction de la position, de la vitesse et du couple de rotation de l'élément de direction (12).

11. Procédé selon l'une des revendications 7 à 10, **caractérisé en ce qu'**un couple d'assistance maximal du moteur (26) est calculé dans une unité de limitation (44) de l'unité de commande et de régulation (24), en particulier en fonction du facteur d'amortissement et de la vitesse du véhicule automobile détectés par l'unité d'amortissement (40).
